(19) Europäisches Patentamt
European Patent Office
Office européen des brevets

(11) **EP 0 860 065 B1**

(12) **EUROPEAN PATENT SPECIFICATION**

(45) Date of publication and mention
of the grant of the patent:
**27.11.2002 Bulletin 2002/48**

(21) Application number: **96937419.8**

(22) Date of filing: **08.11.1996**

(51) Int Cl.[7]: **H04L 12/14**

(86) International application number:
**PCT/GB96/02732**

(87) International publication number:
**WO 97/017812 (15.05.1997 Gazette 1997/21)**

(54) **PACKET NETWORK TARIFFING**

PAKETNETZGEBÜHRENERFASSUNG

TARIFICATION DE RESEAUX DE COMMUTATION PAR PAQUETS

(84) Designated Contracting States:
**DE FR GB**

(30) Priority: **09.11.1995 GB 9523017**

(43) Date of publication of application:
**26.08.1998 Bulletin 1998/35**

(73) Proprietor: **Nortel Networks Limited
Montreal, Quebec H2Y 3Y4 (CA)**

(72) Inventor: **GRIFFIN, Peter
D-60598 Frankfurt am Main (DE)**

(74) Representative: **Ryan, John Peter William et al
Nortel Networks
Intellectual Property Law Group
London Road
Harlow, Essex CM17 9NA (GB)**

(56) References cited:
WO-A-95/08881          WO-A-95/27385

• IEEE JOURNAL ON SELECTED AREAS IN COMMUNICATION, vol. 13, no. 7, September 1995, NEW YORK US, pages 1162-1175, XP000525655 R.J.EDELL ET AL: "BILLING USERS AND PRICING FOR TCP"
• TELECOMMUNICATIONS (INT.ED.), vol. 29, no. 4, April 1995, US, pages 27-33, XP000577623 N.RICKARD: "ABR:REALIZING THE PROMISE OF ATM"
• IEEE / ACM TRANSACTIONS ON NETWORKING, vol. 1, no. 6, December 1993, NEW YORK US, pages 614-627, XP000430132 R.COCCHI ET AL: "PRICING IN COMPUTER NETWORKS: MOTIVATION, FORMULATION AND EXAMPLE"
• COMPUTER COMMUNICATIONS REVIEW, vol. 20, no. 5, October 1990, NEW YORK US, pages 56-66, XP000167877 D.ESTRIN ET AL: "DESIGN CONSIDERATIONS FOR USAGE ACCOUNTING AND FEEDBACK IN INTERNETWORKS"
• D.E.COMER: "INTERNETWORKING WITH TCP/IP" 1991 , PRENTICE-HALL , ENGLEWOOD CLIFFS, US XP002010511 see paragraph 12.7 see paragraph 12.21 see figure 12.11 see figure 12.14

## Description

<u>TECHNICAL FIELD</u>

This invention relates to packet-based transfer modes, and in particular to tariffing traffic carried by such transfer modes.

<u>BACKGROUND OF THE INVENTION</u>

Asynchronous transfer mode (ATM) is a standardised packet-based transfer mode for transferring information within a telecommunications network. ATM operates by grouping data into fixed-length packets or cells, each cell comprising a header, indicating the intended destination and other overhead information for the cell, and a payload of data.

Broadband integrated services digital networks (B-ISDN), which use ATM, will offer considerably more options and flexibility than traditional public switched telephone networks or the current generation of packet-switched data networks. ATM allows different traffic types to be mixed on the same network, such as voice, video and data traffic. Another feature of ATM is that it can efficiently carry traffic whose bandwidth is variable. Traditional circuit switched networks assign bandwidth in multiples of 64Kbit/s regardless of whether this bandwidth is required for the entire duration of a call. In contrast, ATM can accommodate traffic whose information rate varies during a call.

For network operators, an important feature of a telecommunications network is a mechanism for charging subscribers for the use that they make of the network. In traditional circuit-switched networks, tariffing has usually been based on the bandwidth used and the distance over which the traffic is carried. With a fixed assignment of bandwidth (in multiples of 64 Kbit/s), for the duration of a call, it is simple to calculate the bandwidth used and to derive a charge which is fair to both the customer and the operator.

Tariffing for an ATM based network is more challenging, since resources are allocated dynamically to ATM calls to maximise use of the network. The resource allocated to a call will depend upon its traffic parameters i.e. peak cell rate, mean cell rate, burstiness and the Quality of Service (QoS) contract assigned to the call.

It is possible to tariff according to one of the call parameters, such as peak cell rate, but this results in a charge which is an unfair representation of the network resources actually used by a subscriber. It is also possible to tariff according to the volume of traffic that a subscriber transmits during a call, such as by counting cells. This has a disadvantage in that it does not account for resources which the network will have reserved for that call at call set-up, but which were unused during the call. This is thus an unfair tariff for the network operator. Patent Application WO 95/27385 discloses an ATM transmission system in which data flow through an interface of the system is monitored for accounting purposes.

It is an object of the present invention to enable the tariffing of calls made on a packet-based network, such as one using ATM, in a manner which minimises the disadvantages of the prior art methods.

<u>SUMMARY OF THE INVENTION</u>

According to the present invention, there is provided a packet-based telecommunications system for carrying calls between subscribers, the system having a call processor which performs a call admission function to calculate an equivalent bandwidth of a new call and an accounting centre,
wherein the call processor is coupled to the accounting centre and is arranged to pass the equivalent bandwidth information to the accounting centre for determining cost information related to the call.

According to another aspect of the present invention, there is provided a call processor for use in a packet-based telecommunications system for carrying calls between subscribers, the call processor being arranged to perform a call admission function to calculate an equivalent bandwidth of a new call,
wherein the call processor has an output to couple to an accounting centre and is arranged to pass the equivalent bandwidth information to the accounting centre.

According to a further aspect of the present invention, there is provided a method of operating a packet-based telecommunications system for carrying calls between subscribers, the system having a call processor and an accounting centre, the method comprising the call processor performing a call admission function which calculates an equivalent bandwidth of a new call, based on call descriptors declared by one of the subscribers,
and wherein the accounting centre receives the equivalent bandwidth information from the call processor and uses it to determine cost information related to the call.

By linking the accounting centre to the call processor a charge may be calculated which accurately reflects use made of the network by a subscriber, using equivalent bandwidth information which has already been calculated by the call admission control function of the call processor.

Preferably a policing function in the system, which derives policing information relating to differences between the call descriptors declared at call set-up and call descriptors measured during the call, also passes information to the accounting centre.

Preferably the accounting centre is a billing centre which uses the information that it receives to calculate a charge to charge the subscribers for their calls. The billing centre preferably uses the information in a cost model which calculates a charge for the call which accounts for switching and transport resources reserved or used.

An embodiment of the invention is described where the packet-based communications system is Asynchronous Transfer Mode (ATM), but it will be understood that other systems such as frame relay, Switched Multimegabit Data Service (SMDS), Connectionless Broadband Data Service (CBDS) and Distributed Queue Dual Bus (DQDB) could also be used.

## BRIEF DESCRIPTION OF THE DRAWINGS

An embodiment of the present invention will now be described, by way of example only, with reference to the accompanying drawings, in which:

Figure 1 illustrates the characteristics of a typical call on a packet-based network;
Figure 2 shows a telecommunications system in accordance with an embodiment of the invention;
Figure 3 illustrates the steps of a method which is performed in the system of figure 2.

## DESCRIPTION OF PREFERRED EMBODIMENTS

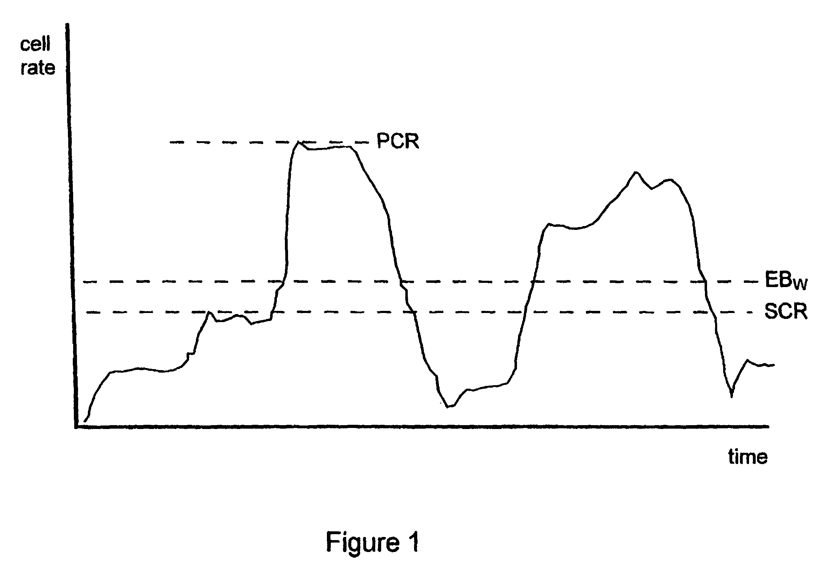

Figure 1 illustrates the traffic flow characteristics of a typical ATM call between subscribers. The rate at which data is generated by a subscriber varies during the duration of the call. Data is packed into ATM cells and transported across the telecommunications network. One of the characteristics for defining an ATM call is the Peak Cell Rate (PCR), based on the minimum time interval between two cells of a network connection. Another characteristic is Sustained Cell Rate (SCR) which is equivalent to the mean cell rate.

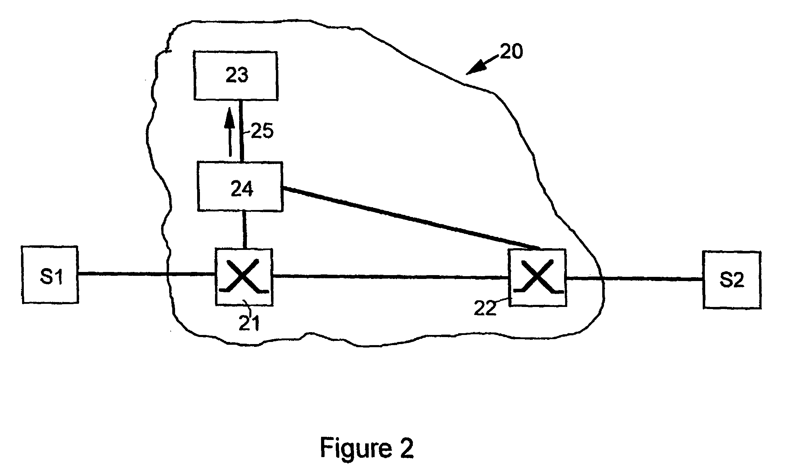

Figure 2 shows an ATM network 20 coupling subscriber terminals S1 and S2. A route is established between the subscribers via switches 21, 22. A call processor 24 controls switches 21, 22 and is responsible for establishing a connection across the network. Call processors may be allocated one per switch, or alternatively may be shared by a number of switches, as shown in figure 2 where processor 24 is responsible for switches 21 and 22. A call processor may be embedded in a switch, the combined switch and processor being sold as one unit. Alternatively the call processor may be provided as a separate unit.

Traffic management is implemented in an ATM network to ensure an acceptable quality of service of ATM connections. A key traffic management function is the call admission control (CAC) procedure, which determines whether a new call can be accepted by the network, based on the requirements of the new call and the available network resource.

Policing ensures that the traffic descriptors of the call conform to those declared in the initial call request.

Call admission control is the set of actions taken during the call set-up phase (or during the call re-negotiation phase) to establish whether a virtual channel or virtual path connection can be accepted or rejected. A new call will be accepted if there are sufficient available network resources to guarantee that quality of service of the existing calls and the new call will be met.

The CAC procedure estimates the resource requirements of an ATM connection based on the connection's traffic descriptors and QoS requirements. The ITU-T has defined a mandatory traffic descriptor, the Peak Cell Rate (PCR) based on the minimum time interval between two consecutive cells of the connection. It has also defined the Cell Delay Variation Tolerance (CDVT) that allows for some variation in the PCR. The Sustainable Cell Rate (SCR) and the Burst Tolerance (BT) have been defined by the ATM Forum. ATM networks dynamically allocate bandwidth according to the relative needs of the calls on the network. This makes it difficult to quantify the network resource needed to carry a call through the network.

One common algorithm implemented by CAC is the equivalent bandwidth method (also called equivalent capacity or equivalent bit rate). Here, an equivalent bandwidth, $EBw,$ is determined for the call from the parameters declared in the call request. The call is accepted if the unassigned capacity of the route is greater than or equal to the calculated $EBw$. The $EBw$ is the minimum available bandwidth that must be reserved on a network link in order to guarantee delivery of the call within the agreed QoS performance parameters. In general, the $EBw$ of a call will be a weighted average of its PCR and SCR. The $EBw$ for a given call may vary from link to link and is based on the source's traffic descriptors (PCR, SCR, BT), the cell-level performance objectives (delay, delay variation, cell loss, cell error rate), the capacity of the link, and the buffer size. Thus, for example, a call with stringent delay criteria will need a higher equivalent bandwidth when compared with a call with a high CDVT and delay tolerance. The $EBw$ is also a weak function of the properties of the other calls on the link. However, this relationship is usually ignored.

The reserved (or unavailable) bandwidth on a link is the sum of the equivalent bandwidths of the calls that have already been accepted onto the link. The call utilisation level of a link is sometimes defined as the sum of the equivalent bandwidths of all the calls on a link, divided by the link capacity.

The equivalent bandwidth of a constant bit rate (CBR) call is trivial and reduces to the value of the peak cell rate, PCR. Variable bit rate (VBR) calls are more of a challenge to dimension. A range of equivalent bandwidth algorithms are known. One equivalent bandwidth algorithm which is commonly used by switch manufacturers in their CAC algorithms is that proposed by Gibbens-Hunt.

In addition to the call admission control, performed at call set-up, policing or usage/network parameter control (UPC/NPC) are a set of actions taken by the network to monitor and control traffic in terms of traffic offered and the validity of the ATM connection, at the user access and network access respectively. The main purpose is to protect the network resources from malicious as well as unintentional misbehaviour, which can affect the QoS of the already established connections, by detecting violations of the negotiated parameters. This maintains the efficiency and stability of the network.

Referring again to figure 2, an accounting centre 23 is linked to a call processor 24 by a link 25. Equivalent bandwidth information calculated by call processor 24 during call admission control (CAC) is passed along link 25 to the accounting centre. In a network having a plurality of call processors, each call processor is linked to the accounting centre. This connection could be a direct link or a cascaded link through other call processors. The equivalent bandwidth information is used to derive cost information related to calls made on the network.

The primary use for the equivalent bandwidth information is to calculate charges for calls made across the network. Accounting centre 23 uses a cost model to derive a charge and maintains a record of charges for each subscriber. By linking the accounting centre to the call processor a charge may be calculated which accurately reflects use made of the network by a subscriber, using equivalent bandwidth information which has already been calculated by the call admission control function of the call processor.

A further use of the equivalent bandwidth information is for monitoring the performance, use and efficiency of the network. Conveying just equivalent bandwidth information, which has already been computed by call processors, considerably reduces processing requirements and signalling overheads in gathering statistics. The accounting centre may also use the equivalent bandwidth information to assess profitability of the network.

Information generated by the policing controls during a call may also be passed over link 25 to the billing centre to modify charging by some penalty factor. Policing controls can be implemented at the network boundaries, or at each switch or call processor. If policing controls are not implemented at the call processor, then suitable links must be provided between the entity responsible for policing and the accounting centre to convey the policing information.

The accounting centre will use a cost model to derive a charge for a subscriber's use of the network.

It is proposed that the variable component of a call charge in the cost model is made proportional to the network resources utilised during the call. This can be quantified by the equivalent bandwidth of the call, ($EBw$) and the call duration. However, it should be noted that the $EBw$ of a call varies from link to link on a network. To simplify the cost model, the cost of the call may be based on the average $EBw$ of the call, $\overline{EBw}$. Preferably a correction factor is applied to the cost to allow for differences between the negotiated call parameters, as specified by the call request, and those measured by the network policing function.

This variable component reflects the switching, transport and running costs for the network. Preferably the equivalent bandwidth $EBw$ or average equivalent bandwidth $\overline{EBw}$ information is used to scale the switching and transport costs of the network. A call charge may be based on resources actually used by a subscriber during a call or those resources which were reserved for the subscriber, based on call descriptors exchanged at call set-up.

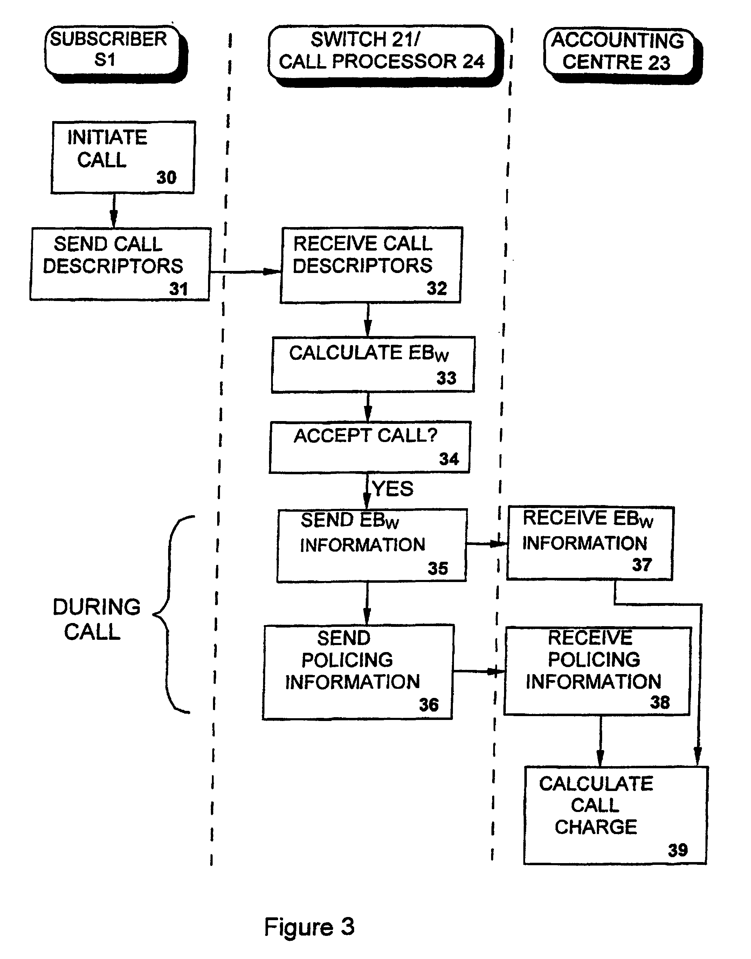

Figure 3 illustrates the method by which a call is processed by the system of figure 2. For clarity the switch 21 and call processor entities have been combined.

A call is initiated by subscriber S1 at step 30. The subscriber terminal sends call descriptor data to switch 21 at step 31. This data is received by the switch at step 32. Call processor 24 calculates $EBw$ at step 33, on the basis of the call descriptor data. At step 34 a decision is made on whether to accept or reject the call. This decision will depend on whether the network has sufficient resources to accept the call. If a call is accepted, then equivalent bandwidth information is sent, at step 35 to the accounting centre 23. During the call, and in the event that the resources used by the call do not match the contract agreed at call set-up, policing information is sent, at step 36, from the call processor 24 and similar call processors in the network to the accounting centre. Equivalent bandwidth information $EBw$ and policing information is received by the accounting centre at steps 35, 38 and used, at step 39, to calculate a charge for the call, or to derive network statistics.

**Claims**

1. A packet-based telecommunications system for carrying calls between subscribers(S1,S2), the system being **characterised by** having a call processor(24) which performs a call admission function to calculate an equivalent bandwidth of a new call and an accounting centre(23),
   wherein the call processor(24) is coupled to the accounting centre(23) and is arranged to pass the equivalent bandwidth information to the accounting centre(23) for determining cost information related to the call.

2. A call processor(24) for use in a packet-based telecommunications system according to claim 1, the call processor(24) being arranged to perform a call admission function to calculate an equivalent bandwidth of a new call,
   wherein the call processor(24) has an output to couple to an accounting centre and is arranged to pass the equivalent bandwidth information to the accounting centre(23).

**3.** A telecommunications switch(23,22) for use in a packet-based telecommunications system, wherein the switch(21,22) incorporates a call processor(24) according to claim 2.

**4.** A method of operating a packet-based telecommunications system for carrying calls between subscribers(S1,S2), the system having a call processor (24) and an accounting centre(23), the method being **characterised by** the call processor performing a call admission function which calculates an equivalent bandwidth(33) of a new call(35), based on call descriptors(31) declared by one of the subscribers (51,52),

and wherein the accounting centre(23) receives the equivalent bandwidth information(37) from the call processor(24) and uses it to determine cost information related to the call(39).

**5.** A method of operating a packet-based telecommunications system according to claim 4 wherein a policing function(36,38) derives policing information relating to differences between the declared call descriptors and call descriptors(31) measured during that call, and also passes this policing information (38) to the accounting centre(23).

**6.** A method of operating a packet-based telecommunications system according to claim 4 or claim 5 wherein the accounting centre is a billing centre(23) which uses the information that it receives to calculate a charge to charge the subscribers for their calls (39).

**7.** A method of operating a packet-based telecommunications system according to claim 6 wherein the billing centre(23) uses the information in a cost model which calculates a charge for the call which accounts for switching and transport resources reserved or used.

**8.** A packet-based telecommunications system according to claim 1 wherein the telecommunications system is an ATM system.

**9.** A call processor according to claim 2 wherein the packet-based telecommunications system is an ATM system.

**10.** A telecommunications switch according to claim 3 wherein the packet-based telecommunications system is an ATM system.

**Patentansprüche**

**1.** Paketbasiertes Telekommunikationssystem zur Übertragung von Verbindungen zwischen Teilnehmern (S1, S2), wobei das System **dadurch gekennzeichnet ist, daß** es einen Verbindungsprozessor (24), der eine Verbindungszulassungsfunktion ausführt, um eine äquivalente Bandbreite einer neuen Verbindung zu berechnen, und ein Abrechnungszentrum (23) aufweist,

wobei der Verbindungsprozessor (24) mit dem Abrechnungszentrum (23) gekoppelt und so angeordnet ist, daß er die äquivalente Bandbreiteninformation an das Abrechnungszentrum (23) zur Bestimmung von auf die Verbindung bezogenen Kosteninformationen weiterleitet.

**2.** Verbindungsprozessor (24) zur Verwendung in einem paketbasierten Telekommunikationssystem nach Anspruch 1, wobei der Verbindungsprozessor (24) so angeordnet ist, daß er eine Verbindungszulassungsfunktion zur Berechnung einer äquivalenten Bandbreite einer neuen Verbindung ausführt, wobei der Verbindungsprozessor (24) einen Ausgang zur Kopplung mit einem Abrechnungszentrum aufweist und so angeordnet ist, daß er die äquivalente Bandbreiteninformation an das Abrechnungszentrum (23) weiterleitet.

**3.** Telekommunikationsvermittlung (23, 22) zur Verwendung in einem paketbasierten Telekommunikationssystem, bei dem die Vermittlung (21, 22) einen Verbindungsprozessor (24) nach Anspruch 2 beinhaltet.

**4.** Verfahren zum Betrieb eines paketbasierten Telekommunikationssystems zur Übertragung von Verbindungen zwischen Teilnehmern (S1, S2), wobei das System einen Verbindungsprozessor (24) und ein Abrechnungszentrum (23) aufweist, wobei das Verfahren **dadurch gekennzeichnet ist, daß** es die Ausführung einer Verbindungszulassungsfunktion durch den Prozessor umfaßt, der eine äquivalente Bandbreite (33) einer neuen Verbindung (35) auf der Grundlage von Verbindungsbezeichnungen (31) berechnet, die von einem der Teilnehmer (S1, S2) erklärt werden,

und wobei das Abrechnungszentrum (23) die äquivalente Bandbreiteninformation (37) von dem Verbindungsprozessor (34) empfängt und sie zur Bestimmung von auf die Verbindung (39) bezogenen Kosteninformationen verwendet.

**5.** Verfahren zum Betrieb eines paketbasierten Telekommunikationssystems nach Anspruch 4, bei dem eine Zellstromkontrollfunktion (36, 38) Zellstrominformation ableitet, die sich auf Unterschiede zwischen den erklärten Verbindungsbezeichnungen und Verbindungsbezeichnungen (31) bezieht, die während der Verbindung gemessen werden, und außerdem diese Zellstromkontrollinformation (38) an das Abrechnungszentrum (23) liefert.

**6.** Verfahren zum Betrieb eines paketbasierten Telekommunikationssystems nach Anspruch 4 oder 5, bei dem das Abrechnungszentrum ein Gebührenerfassungszentrum (23) ist, das die Information, die sie empfängt, verwendet, um eine Gebühr für die Gebührenbelastung der Teilnehmer für ihre Verbindungen (39) zu berechnen.

**7.** Verfahren zum Betrieb eines paketbasierten Telekommunikationssystems gemäß Anspruch 6, bei dem das Gebührenerfassungszentrum (23) die Information in einem Kostenmodell verwendet, das eine Gebühr für die Verbindung berechnet, die die reservierten oder verwendeten Vermittlungs- und Transportressourcen berücksichtigt.

**8.** Paketbasiertes Telekommunikationssystem nach Anspruch 1, bei dem das Telekommunikationssystem ein ATM-System ist.

**9.** Verbindungsprozessor nach Anspruch 2, bei dem das paketbasierte Telekommunikationssystem ein ATM-System ist.

**10.** Telekommunikationsvermittlung nach Anspruch 3, bei der das paketbasierte Telekommunikationssystem ein ATM-System ist.

**Revendications**

**1.** Système de télécommunications à base de paquets pour supporter des appels entre des abonnés (S1, S2), le système étant **caractérisé en ce qu'**il possède un processeur d'appels (24) qui effectue une fonction d'admission d'appels pour calculer une largeur de bande équivalente d'un nouvel appel et un centre comptable (23),

dans lequel le processeur d'appels (24) est couplé au centre comptable (23) et est agencé pour faire passer les informations de largeur de bande équivalente au centre comptable (23) pour déterminer des informations de coût concernant l'appel.

**2.** Processeur d'appels (24) pour utilisation dans un système de télécommunications à base de paquets selon la revendication 1, le processeur d'appels (24) étant agencé pour effectuer une fonction d'admission d'appels pour calculer une largeur de bande équivalente d'un nouvel appel,

dans lequel le processeur d'appels (24) comporte une sortie pour le couplage à un centre comptable et est agencé pour faire passer les informations de largeur de bande équivalente au centre comptable (23).

**3.** Commutateur de télécommunications (23, 22) pour utilisation dans un système de télécommunications à base de paquets, dans lequel le commutateur (21, 22) incorpore un processeur d'appels (24) selon la revendication 2.

**4.** Procédé pour l'exploitation d'un système de télécommunications à base de paquets pour supporter des appels entre abonnés (S1, S2), le système comportant un processeur d'appels (24) et un centre comptable (23), le procédé étant **caractérisé en ce qu'**il comprend l'exécution par le processeur d'appels d'une fonction d'admission d'appels qui calcule une largeur de bande équivalente (33) d'un nouvel appel (35) en fonction de descripteurs d'appels (31) déclarés par l'un des abonnés (S1, S2),

et dans lequel le centre comptable (23) reçoit les informations de largeur de bande équivalente (37) du processeur d'appels (24) et les utilise pour déterminer des informations de coût relatives à l'appel (39).

**5.** Procédé pour l'exploitation d'un système de télécommunications à base de paquets selon la revendication 4, dans lequel une fonction de police (36, 38) détermine des informations de police concernant des différences entre les descripteurs d'appels déclarés et des descripteurs d'appels (31) mesurés pendant cet appel, et fait également passer ces informations de police (38) au centre comptable (23).

**6.** Procédé pour l'exploitation d'un système de télécommunications à base de paquets selon la revendication 4 ou la revendication 5, dans lequel le centre comptable est un centre de facturation (23) qui utilise les informations qu'il reçoit pour calculer une charge à taxer aux abonnés pour leurs appels (39).

**7.** Procédé pour l'exploitation d'un système de télécommunications à base de paquets selon la revendication 6, dans lequel le centre de facturation (23) utilise les informations dans un modèle de coût qui calcule une charge pour l'appel qui tient compte de ressources de commutation et de transport réservées ou utilisées.

**8.** Système de télécommunications à base de paquets selon la revendication 1, dans lequel le système de télécommunications est un système ATM.

**9.** Processeur d'appel selon la revendication 2, dans lequel le système de télécommunications à base de paquets est un système ATM.

**10.** Commutateur de télécommunications selon la revendication 3, dans lequel le système de télécommunications à base de paquets est un système ATM.

Figure 1

Figure 2

Figure 3